# EUROPÄISCHE PATENTSCHRIFT

(11) **EP 3 417 500 B1**
(45) Veröffentlichungstag und Bekanntmachung des Hinweises auf die Patenterteilung: **27.11.2019**
(21) Anmeldenummer: 17704771.9
(22) Anmeldetag: 14.02.2017
(51) Int. Cl.: H01M 4/133, H01M 4/134, H01M 4/36, H01M 4/38, H01M 4/583, H01M 10/0525, H01M 4/02

(54) **KERN-SCHALE-KOMPOSITPARTIKEL**
COMPOSITE CORE-SHELL PARTICLES
PARTICULES COMPOSITES DE TYPE CORE-SHELL

(30) Priorität: 17.02.2016 DE 102016202459
(43) Veröffentlichungstag der Anmeldung: 26.12.2018
(73) Patentinhaber: Wacker Chemie AG, 81737 München (DE)
(72) Erfinder: TROEGEL, Dennis, 91242 Ottensoos (DE); HAUFE, Stefan, 85579 Neubiberg (DE)
(74) Vertreter: Ege, Markus
(86) Internationale Anmeldenummer: PCT/EP2017/053210
(87) Internationale Veröffentlichungsnummer: WO 2017/140642

(56) Entgegenhaltungen:
- EP-A2- 1 205 989
- US-A1- 2015 270 538
- US-A1- 2016 013 481

## Beschreibung

Die vorliegende Erfindung betrifft Kern-Schale-Kompositpartikel, Verfahren zu deren Herstellung und deren Verwendung in Anodenaktivmaterialien für Lithium-Ionen-Batterien.

Als Speichermedien für elektrischen Strom sind Lithium-Ionen-Batterien gegenwärtig die praxistauglichen elektrochemischen Energiespeicher mit den höchsten Energiedichten. Lithium-Ionen-Batterien werden vor allem im Bereich der tragbaren Elektronik, für Werkzeuge und auch für elektrisch angetriebene Transportmittel, wie Fahrräder oder Automobile, genutzt. Als Material für die negative Elektrode ("Anode") entsprechender Batterien ist gegenwärtig graphitischer Kohlenstoff weit verbreitet. Nachteilig ist jedoch seine relativ niedrige elektrochemische Kapazität von theoretisch höchstens 372 mAh pro Gramm Graphit, die nur etwa einem Zehntel der mit Lithiummetall theoretisch erreichbaren elektrochemischen Kapazität entspricht. Die Entwicklung alternativer Anodenmaterialien führte zu einem Zusatz von Silicium. Silicium bildet mit Lithium binäre elektrochemisch aktive Legierungen, die sehr hohe Lithiumgehalte und beispielsweise für Li_{4.4}Si theoretische spezifische Kapazitäten im Bereich von 4200 mAh pro Gramm Silicium erreichen können.

Nachteiligerweise ist die Ein- und Auslagerung von Lithium in Silicium mit einer sehr starken Volumenänderung verbunden, die etwa 300% erreichen kann. Derartige Volumenänderungen setzen die Kristallite einer starken mechanischen Belastung aus, auf Grund derer die Kristallite schließlich auseinander brechen können. Dieser auch als elektrochemische Mahlung bezeichnete Prozess führt im Aktivmaterial und in der Elektrodenstruktur zu einem Verlust der elektrischen Kontaktierung und damit zur Zerstörung der Elektrode unter Kapazitätsverlust.

Weiterhin reagiert die Oberfläche des Silicium-Anodenmaterials mit Bestandteilen des Elektrolyten unter kontinuierlicher Bildung passivierender Schutzschichten (Solid Electrolyte Interface; SEI), was zu einer Immobilisierung von Lithium führt. Auf Grund der extremen Volumenänderung des Siliciums während des Lade- bzw. Entladevorgangs der Batterie platzt die SEI regelmäßig auf, wodurch weitere Oberflächen des Silicium-Anodenmaterials freigelegt werden, die dann einer weiteren SEI-Bildung ausgesetzt sind, so dass während des Betriebs der Batterie ein kontinuierlicher irreversibler Lithium-Ionen-Verlust resultiert. Da in der Vollzelle die Menge an mobilem Lithium, welches der nutzbaren Kapazität entspricht, durch das Kathodenmaterial begrenzt ist, ist dieses schnell verbraucht und die Kapazität der Zelle sinkt bereits nach wenigen Zyklen in anwendungstechnisch nicht annehmbarem Ausmaß.
Die Abnahme der Kapazität im Laufe mehrerer Lade- und Entladezyklen wird auch als Fading oder kontinuierlicher Kapazitätsverlust bezeichnet und ist in der Regel irreversibel.
Um diesen Problemen zu begegnen, sind verschiedene Si/C-Komposite entwickelt worden, in denen das Silicium in Kohlenstoff-Matrices eingelagert sind. US 2016/013481 A1, EP 1205989 A2 und US 2015/270538 beschreiben zum Beispiel Kern-Schale Kompositen.

So sind eine Vielzahl poröser Si/C-Komposite bekannt, in denen sowohl die Siliciumpartikel als auch die Poren in der Kohlenstoff-Matrix in undefinierter, statistischer Weise verteilt sind, wie beispielsweise beschrieben von L.-Z. Fan et al. in ChemElectroChem, 2014, 1, 2124; L. Zhang et al. in J. Mater. Chem. A 2013, 1, 15068; Z. Liu et al. in J. Power Sources 2015, 286, 534; WO10006763; US2013130115; KR101494715; US2013045423 oder JP2006228640. Analoge Si/C-Komposite sind in den folgenden Dokumenten mit einer äußeren Beschichtung versehen: US6770399; B. Li et al. in Electrochem. Comm. 2014, 49, 98; US2012164531; US2013323595; WO14031929 oder US20120100438. Auch Y.-K. Sun et al. beschreiben in Electrochimica Acta 2011, 58, 578 Si/C-Kompositpartikel, in denen die Siliciumpartikel und die Poren statistisch in der Kohlenstoffmatrix verteilt sind. Typisch für solche Komposite sind Poren mit Durchmessern im Bereich von 0,4 bis 50 nm. Solche Komposite werden als mikro- oder mesoporös eingestuft. Die Poren sind üblicherweise erheblich kleiner als die Siliciumpartikel. All diese Schriften offenbaren keine Si/C-Komposite, in denen die Siliciumpartikel in den Poren der Komposite eingekapselt sind.

Weiterhin sind poröse Si/C-Komposite mit Makroporen bekannt, in die Siliciumpartikel eingelagert sind, wie beispielsweise beschrieben von J. Ahn et al. in J. Phys. Chem. C. 2015, 119, 10255. Die Si/C-Komposite von J. Ahn et al. sind mit einem porösen und damit undichten Kohlenstofffilm umhüllt. Die CN 104319401 betrifft Verfahren zur Herstellung von porösen Si/C-Kompositen über den Einsatz von SiO₂-Templaten, wodurch Si-Nanopartikel in Poren der Komposite eingebettet werden. Die Oberfläche der Si/C-Komposite ist porös. Analoges trifft auch auf die Core-Shell-Si/C-Nanokomposite von L.-Z. Fan et al. in Nanoscale 2014, 6, 3138 beziehungsweise von Z. Sun et al. J. Electrochem. Soc. 2015, 162, A1530 zu. L .Li et al. beschreiben in Chem. Commun. 2014, 50, 5878 "yolk-shell"-Si/C-Nanokomposite, in welchen Siliciumpartikel zunächst mit Kohlenstoff beschichtet werden und anschließend Anteile des Siliciums mit Natronlauge aus den Kompositen herausgeätzt wird, so dass im Inneren der C-Hülle um die verbleibenden Siliciumpartikel kleinteilige Poren entstehen. J.-P. Zhang et al. beschreiben in RSC Adv. 2014, 4, 36218 Si/C-Nanokomposite mit "yolk-shell"-Struktur, in denen mesoporöse Silicium-Partikel mit einer Kohlenstoff-Hülle versehen werden. Hier wird ein Teil der Volumenausdehnung durch die mesoporöse Struktur des Siliciums aufgefangen. L. Zhang et al. beschreiben in Electrochimica Acta 2014, 125, 206 poröse Si/C-Komposite, in deren Poren teilweise Si-Partikel eingebettet vorliegen. Auch hier wird ein Templat durch einen Ätzschritt mit Flusssäure entfernt. Die Komposit-Partikel sind somit nicht dicht gegenüber flüssigen Medien. Die US7722991 offenbart Komposit-Partikel mit poröser Matrix und Porenkanälen. Das Aktivmaterial ist in Poren eingebettet. Die US8361659 beansprucht poröse Kohlenstoff-Komposite mit einem Porenvolumen, das zu 50 bis 100% mit Aktivmaterial gefüllt ist. Die Porenräume sind miteinander und mit der Kompositoberfläche über Porenkanäle verbunden. Die CN104300125 beschreibt poröse, Granatapfel-analoge Si/C-Komposite mit definierten Hohlräumen in der C-Matrix, in welchen Si-Nanopartikel eingebettet vorliegen.

Y. Cui et al. beschreiben in Nature Nanotechnology 2014, 9, 187 poröse Si/C-Komposite mit Granatapfel-artiger Struktur basierend auf amorphem Kohlenstoff. Die Si-Nanopartikel sind darin in definierten Hohlräumen eingebettet. Der Silicium-Gehalt der Komposite ist > 60 Gew-% und der Kohlenstoff-Anteil der Matrix ist entsprechend niedrig, so dass die die Si-Nanopartikel umhüllende Kohlenstoffmatrix verhältnismäßig dünnwandig ist. Eine solche Vorgehensweise ermöglicht zwar hohe gravimetrische Kapazitäten (mAh/g), begrenzt aber letztlich die volumetrische Kapazität. Die Si/C-Kompositstrukturen von Cui et al. sind nicht dicht gegenüber flüssigen Medien, was beispielsweise daran ersichtlich ist, dass sich die eingebetteten Si-Nanopartikel durch eine wässrige Natronlauge vollständig aus der porösen Kohlenstoff-Struktur herausätzen lassen, wie in den Supplementary Information zu Nature Nanotechnology 2014, 9, 187 gezeigt. Die CN104332632 beschreibt poröse Si/C-Komposite mit Kern-Schale-Struktur aufgebaut aus einem Silicium-Kern, einer Puffer-Schicht enthaltend hohle Kohlenstoff-Sphären und einer äußeren Graphit-Beschichtung zur Erhöhung der mechanischen Stabilität und Leitfähigkeit. In die Puffer-Schicht kann jedoch Flüssigkeit eingelagert werden, so dass die Si/C-Komposite nicht flüssigkeitsdicht sind. Auch die WO215051309 betrifft poröse Si/C-Komposite mit Granatapfel-Struktur. Die eingebetteten Si-Nanopartikel können durch wässrige Laugen herausgeätzt werden, weswegen die Kohlenstoff-Matrix nicht flüssigkeitsdicht ist. Problematischerweise wird nur ein Teil der SEI auf der äußeren Komposit-Oberfläche gebildet. Zur Verbesserung der Oberflächeneigenschaften wird in der WO215051309 auch das Aufbringen von zusätzlichen, leitfähigen Beschichtungen, wie Kupfer, beschrieben. Solche Si/C-Komposite zeichnen sich durch eine verringerte SEI-Bildung und stabilere elektrochemische Eigenschaften aus. Kupfer besitzt eine relativ hohe Dichte, so dass die gravimetrische Kapazität solcher poröser Si/C-Komposite drastisch reduziert ist. Kupfer bildet keine Legierungen mit Lithium, so dass Kupferbeschichtungen eigentlich Sperrschichten für Lithium-Ionen darstellen. Der Umstand, dass die Kupfer-beschichteten Si/C-Komposite der WO215051309 in Lithiumionenbatterien dennoch aktiv sind, ist ein Beleg für die mangelnde Dichtigkeit der Si/C-Komposite.

Vor diesem Hintergrund bestand die Aufgabe, Siliciumpartikel enthaltende Kompositpartikel bereitzustellen, die bei Einsatz in Lithiumionen-Batterien eine hohe Zyklenbeständigkeit ermöglichen, insbesondere zu einer möglichst geringen SEI-Bildung führen und/oder das elektrochemische Mahlen reduzieren. Zudem sollten die Silicium enthaltenden Kompositpartikel nach Möglichkeit eine hohe mechanische Stabilität besitzen und möglichst wenig spröde sein.

Ein Gegenstand der Erfindung sind Kern-Schale-Kompositpartikel, wobei der Kern eine Siliciumpartikel enthaltende, poröse, Kohlenstoff-basierte Matrix ist, in der Siliciumpartikel in Poren der Matrix eingeschlossen sind und die Siliciumpartikel enthaltenden Poren einen Durchmesser von ≥ 60 nm haben (Bestimmungsmethode: Raster-Elektronen-Mikroskopie (REM)), und wobei die Schale erhältlich ist durch Carbonisierung von einem oder mehreren Kohlenstoff-Precursoren ausgewählt aus der Gruppe umfassend Teere, Peche, HardCarbon, SoftCarbon und Kohlenwasserstoffe mit 1 bis 20 Kohlenstoffatomen, was zu einer unporösen Schale führt, wobei unporöse Schale bedeutet, dass etwaige in der Schale enthaltene Poren < 10 nm sind.

Die Siliciumpartikel enthaltenden Poren sind generell in die Matrix eingebettet. Die Matrix kann als Gerüst für die Poren betrachtet werden. Die einzelnen Poren liegen vorzugsweise isoliert vor. Die Poren sind vorzugsweise nicht über Kanäle miteinander verbunden. Die Form der Poren kann beispielsweise ellipsoid, länglich, eckig, splitterförmig oder vorzugsweise sphärisch sein.

Die Porenwände haben eine Dicke von vorzugsweise 4 bis 330 nm, besonders bevorzugt 24 bis 240 nm und am meisten bevorzugt 50 bis 146 nm (Bestimmungsmethode: Raster-Elektronen-Mikroskopie (REM)). Die Dicke der Porenwände bezeichnet allgemein den kürzesten Abstand zwischen zwei Poren.

Das Volumen einer Pore entspricht vorzugsweise mindestens dem Dreifachen und besonders bevorzugt mindestens dem 3,2-fachen und am meisten bevorzugt mindestens dem 3,3-fachen des Volumens des darin befindlichen Siliciumpartikels. Das Volumen einer Pore entspricht vorzugsweise höchstens dem 4-fachen und besonders bevorzugt höchstens dem 3,7-fachen und am meisten bevorzugt höchstens dem 3,4-fachen des Volumens des darin befindlichen Siliciumpartikels (Bestimmungsmethode: 1 minus [Quotient aus der Rohdichte (bestimmt mittels Xylol-Pyknometrie gemäß DIN 51901) und der Skelettdichte (bestimmt mittels He-Pyknometrie gemäß DIN 66137-2)]).

Die Oberfläche der in den erfindungsgemäßen Poren befindlichen Siliciumpartikel hat im Wesentlichen keinen Kontakt mit der Matrix. Solche Siliciumpartikel befinden sich also im Wesentlichen im freien Volumen einer Pore. Solche Siliciumpartikel haben im Allgemeinen nur an der Stelle Kontakt mit der Matrix, an der die Siliciumpartikel innerhalb einer Pore auf der Matrix zu liegen kommen. An der Stelle kann auch eine Anbindung der Siliciumpartikel an die Matrix vorhanden sein. Eine Anknüpfungsstelle der Siliciumpartikel an die Matrix ist im Allgemeinen lokal und nimmt nur einen geringfügigen Teil der Oberfläche eines Siliciumpartikels ein.

Die Poren der Matrix, die Siliciumpartikel enthalten, haben Durchmesser von ≥ 60 nm, bevorzugt ≥ 80 nm, besonders bevorzugt ≥ 150 nm und am meisten bevorzugt ≥ 290 nm. Die Poren der Matrix, die Siliciumpartikel enthalten, haben Durchmesser von vorzugsweise ≤ 1400 nm, mehr bevorzugt ≤ 700 nm, besonders bevorzugt ≤ 500 nm und am meisten bevorzugt ≤ 350 nm (Bestimmungsmethode: Raster-Elektronen-Mikroskopie (REM)). Die Maßgaben betreffend Poren-Durchmesser werden vorzugsweise von dem größten Durchmesser von zwei, besonders bevorzugt von drei zueinander orthogonalen Durchmessern erfüllt. Das Volumen eines Siliciumpartikels, der sich in einer Pore befindet, wird bei der Bestimmung eines Poren-Durchmessers dem Volumen der Pore zugeschlagen.

Die Siliciumpartikel sind im Allgemeinen submikro- oder nanoskalig. Bevorzugte Siliciumpartikel weisen volumengewichtete Partikelgrößenverteilungen mit Durchmesser-Perzentilen d₅₀ von vorzugsweise ≥ 50 nm, mehr bevorzugt ≥ 80 nm, besonders bevorzugt ≥ 100 nm und am meisten bevorzugt ≥ 150 nm auf. Die genannten Durchmesser-Perzentile d₅₀ sind vorzugsweise ≤ 800 nm, besonders bevorzugt ≤ 400 nm und am meisten bevorzugt ≤ 250 nm.

Die volumengewichtete Partikelgrößenverteilung ist erfindungsgemäß bestimmbar nach ISO 13320 mittels statischer Laserstreuung unter Anwendung des Mie-Modells mit dem Messgerät Horiba LA 950 mit Ethanol als Dispergiermedium für die Siliciumpartikel.

Das Verhältnis der Durchmesser der Poren der Matrix, die Siliciumpartikel enthalten, und der Durchmesser der Siliciumpartikel ist vorzugsweise ≥ 1,1, besonders bevorzugt ≥ 1,6 und am meisten bevorzugt ≥ 1,8. Das vorgenannte Verhältnis der Durchmesser ist vorzugsweise ≤ 3, besonders bevorzugt ≤ 2,5 und am meisten bevorzugt ≤ 2 (Bestimmungsmethode: Raster-Elektronen-Mikroskopie (REM)).

Die Poren der Matrix, die Siliciumpartikel enthalten, enthalten vorzugsweise ≤ 10, besonders bevorzugt ≤ 5, noch mehr bevorzugt ≤ 3 und am meisten bevorzugt einen Siliciumpartikel.

Der Anteil der Siliciumpartikel, die sich in erfindungsgemäßen Poren der Matrix befinden, beträgt vorzugsweise ≥ 5%, mehr bevorzugt ≥ 20%, noch mehr bevorzugt ≥ 50%, besonders bevorzugt ≥ 80% und am meisten bevorzugt ≥ 90%, bezogen auf die Gesamtzahl der Siliciumpartikel der Kern-Schale-Kompositpartikel (Bestimmungsmethode: Raster-Elektronen-Mikroskopie (REM)).

Die Siliciumpartikel können isoliert oder agglomeriert, vorzugsweise aber nicht aggregiert in der Komposit-Struktur vorliegen. Die Siliciumpartikel sind vorzugsweise nicht aggregiert, vorzugsweise nicht agglomeriert und/oder vorzugsweise nicht nanostrukturiert.

Aggregiert bedeutet, dass sphärische oder weitestgehend sphärische Primärpartikel, wie sie beispielsweise zunächst in Gasphasenprozessen bei der Herstellung der Siliciumpartikel gebildet werden, im weiteren Reaktionsverlauf des Gasphasenprozesses zusammenwachsen und auf dies Weise Aggregate bilden. Diese Aggregate können im weiteren Reaktionsverlauf Agglomerate bilden. Agglomerate sind eine lose Zusammenballung von Aggregaten. Agglomerate können mit typischerweise eingesetzten Knet- und Dispergierverfahren leicht wieder in die Aggregate aufgespalten werden. Aggregate lassen sich mit diesen Verfahren nicht oder nur teilweise in die Primärpartikel zerlegen. Das Vorliegen von Siliciumpartikeln in Form von Aggregaten oder Agglomeraten kann beispielsweise mittels herkömmlicher Raster-Elektronen-Mikroskopie (REM) sichtbar gemacht werden. Statische Lichtstreuungsmethoden zur Bestimmung der Teilchengrößenverteilungen oder Partikeldurchmessern von Siliciumpartikeln können dagegen nicht zwischen Aggregaten oder Agglomeraten unterscheiden.

Nicht nanostrukturierte Siliciumpartikel haben im Allgemeinen charakteristische BET-Oberflächen. Die BET-Oberflächen der Siliciumpartikel betragen vorzugsweise 0,01 bis 30,0 m²/g, mehr bevorzugt 0,1 bis 25,0 m²/g, besonders bevorzugt 0,2 bis 20,0 m²/g und am meisten bevorzugt 0,2 bis 18,0 m²/g. Die BET-Oberfläche wird gemäß DIN 66131 (mit Stickstoff) bestimmt.

Die Siliciumpartikel können beispielsweise in kristalliner oder amorpher Form vorliegen und sind vorzugsweise nicht porös. Die Siliciumpartikel sind vorzugsweise sphärisch oder splitterförmige Partikel. Alternativ, aber weniger bevorzugt können die Siliciumpartikel auch eine Faserstruktur haben oder in Form von Silicium-haltigen Filmen oder Beschichtungen vorliegen.

Die Siliciumpartikel können beispielsweise auf elementarem Silicium, Siliciumoxid oder Silicium/Metall-Legierungen basieren. Bevorzugt ist elementares Silicium, da dieses die größte Speicherkapazität für Lithium-Ionen aufweist.

Die Siliciumpartikel können bevorzugt aus hochreinem Polysilicium, aber auch gezielt dotiertem Silicium oder metallurgischem Silicium bestehen, welches elementare Verunreinigung aufweisen kann. Weiterhin kann es mit anderen Metallen und Elementen legiert in Form von Siliciden vorliegen, z.B. mit literaturbekannten Metallen wie Li, Sn, Ca, Co, Ni, Cu, Cr, Ti, Al, Fe u.a. Diese Legierungen können binär, ternär oder multinär vorliegen. Zur Erhöhung der elektrochemischen Speicherkapazität ist ein besonders niedriger Gehalt an Fremdelementen bevorzugt.

Die Oberfläche der Siliciumpartikel kann chemisch modifiziert sein. Typische Oberflächenfunktionalitäten können sein: Si-H, Si-Cl, Si-OH, Si-OAlkyl, Si-OAryl, Si-Alkyl, Si-Aryl, Si-OSilyl. Besonders bevorzugt sind Oberflächengruppen, die physikalisch oder chemisch an die Kohlenstoff-Vorstufen, die weiter unten für den Kern beschrieben sind, anbinden können. Die angebundenen Oberflächengruppen können funktionelle Gruppen enthalten und wahlweise monomer oder polymer sein. Sie können nur an einer oder mehreren Molekülketten an der Si-Oberfläche angebunden sein oder mehrere Si-Partikel miteinander verbrücken.

Der Kern, beziehungsweise die Matrix, der Kern-Schale-Kompositpartikel hat volumengewichtete Partikelgrößenverteilungen mit Durchmesser-Perzentilen d₅₀ von vorzugsweise ≥ 1 µm, besonders bevorzugt ≥ 5 µm und am meisten bevorzugt ≥ 10 µm. Der d₅₀-Wert ist vorzugsweise ≤ 90 µm, mehr bevorzugt ≤ 50 µm, besonders bevorzugt ≤ 36 µm und am meisten bevorzugt ≤ 20 µm.

Die Matrix kann zusätzlich Poren mit Durchmessern von ≤ 59 nm, insbesondere von 2 bis 50 nm enthalten (Bestimmungsmethode: Porengrößenverteilung nach BJH (Gasadsorption) gemäß DIN 66134). Solche Poren können gleichmäßig in der Matrix verteilt sein. Solche Poren enthalten vorzugsweise keine Siliciumpartikel.

Die Matrix basiert im Allgemeinen auf Kohlenstoff, insbesondere kristallinem oder amorphem Kohlenstoff. Es sind auch Mischungen aus kristallinen und amorphen Kohlenstoff oder Kohlenstoff mit kristallinen und amorphen Teilbereichen möglich. Die Matrix hat im Allgemeinen eine sphärische, beispielsweise kugelige Form.

Die Matrix basiert vorzugsweise zu 40 bis 90 Gew.-% und besonders bevorzugt 60 bis 80 Gew.-% auf Kohlenstoff. Die Matrix enthält vorzugsweise 10 bis 60 Gew.-% und besonders bevorzugt 15 bis 40 Gew.-% Siliciumpartikel. Die Angaben in Gew.-% beziehen sich je auf das Gesamtgewicht des Kerns des Kern-Schale-Kompositpartikel.

Der Anteil des Kerns beträgt vorzugsweise 80 bis 95 Gew.-% und besonders bevorzugt 85 bis 93 Gew.-%, bezogen auf das Gesamtgewicht der Kern-Schale-Kompositpartikel.

Der Kohlenstoff der Matrix ist beispielsweise erhältlich durch Carbonisieren von einem oder mehreren Kohlenstoff-Vorstufen.

Kohlenstoff-Vorstufen haben im Allgemeinen einen hohen Kohlenstoff-Gehalt und erzeugen bei der thermischen Überführung in Kohlenstoff leitfähige Strukturen in hoher Ausbeute. Die Kohlenstoffausbeuten beim Carbonisieren der Kohlenstoff-Vorstufen betragen vorzugsweise ≥ 15%, mehr bevorzugt ≥ 20%, noch mehr bevorzugt ≥ 25%, besonders bevorzugt ≥ 50% und am meisten bevorzugt ≥ 70%, bezogen auf das Gesamtgewicht der Kohlenstoff-Vorstufen.

Kohlenstoff-Vorstufen für die Matrix sind beispielsweise Resorcin-Formaldehyd-Harz, Lignin oder Polyacrylnitril.

Der aus den Kohlenstoff-Vorstufen erzeugte Kohlenstoff kann die Siliciumpartikel enthaltenden Poren in Form einer dünnen Schicht bedecken beziehungsweise eine Matrix um die Porenräume ausbilden.

Der Kern der Kern-Schale-Kompositpartikel kann gegebenenfalls ein oder mehrere zusätzliche Aktivmaterialien enthalten. Die zusätzlichen Aktivmaterialien können beispielsweise basieren auf einer Kohlenstoffmodifikation, wie beispielsweise Graphit, (Leit-)Ruß, amorpher Kohlenstoff, pyrolytischer Kohlenstoff, Carbon Nanotubes (CNTs), Fullerene, Graphen oder auf den Elementen Li, Fe, Al, Cu, Ca, K, Na, S, Cl, Zr, Ti, Pt, Ni, Cr, Sn, Mg, Ag, Co, Zn, B, P, Sb, Pb, Ge, Bi, Seltene Erden oder Kombinationen aus ihnen. Bevorzugte zusätzliche Aktivmaterialien sind Leitruß, Carbon Nanotubes, Li und Sn. Der Gehalt an zusätzlichen Aktivmaterialien ist bevorzugt ≤ 1 Gew.-% und besonders bevorzugt ≤ 100 ppm, bezogen auf das Gesamtgewicht der Kern-Schale-Kompositpartikel.

Die Poren, die Siliciumpartikel enthalten, sind beispielsweise erhältlich, indem die Siliciumpartikel zunächst mit einem oder mehreren Opfermaterialien beschichtet werden und die so erhaltenen Produkte mit einem oder mehreren der oben genannten Kohlenstoff-Vorstufen beschichtet werden und die Beschichtung basierend auf den Opfermaterialien zu einem späteren Zeitpunkt wieder entfernt wird, wobei die Beschichtung basierend auf den Kohlenstoff-Vorstufen vor oder während des Entfernens der Opfermaterialien in eine Matrix basierend auf Kohlenstoff überführt wird. Auf diese Weise entsteht um die Siliciumpartikel eine Pore. Die Opfermaterialien können in an sich herkömmlicher Weise mit weitgehend beliebigen Schichtdicken aufgebracht werden, so dass Kern-Schale-Kompositpartikel mit den gewünschten Porendurchmessern resultieren.

Die Beschichtung basierend auf den Opfermaterialien hat eine mittlere Schichtdicke im Bereich von vorzugsweise 5 bis 300 nm, besonders bevorzugt 20 bis 300 nm und am meisten bevorzugt 50 bis 100 nm (Bestimmungsmethode: Raster-Elektronen-Mikroskopie (REM)). Die Beschichtung basierend auf den Opfermaterialien weist zumindest an einer Stelle eine Schichtdicke von vorzugsweise 1 bis 300 nm, besonders bevorzugt 20 bis 200 nm und am meisten bevorzugt 50 bis 100 nm auf (Bestimmungsmethode: Raster-Elektronen-Mikroskopie (REM)).

Opfermaterialien können anorganischer oder vorzugsweise organischer Natur sein.

Beispiele für anorganische Opfermaterialien sind Oxide, Carbonate, Silicate, Carbide, Nitride oder Sulfide der Elemente Silicium, Magnesium, Calcium, Zinn, Zink, Titan, Nickel. Konkrete Beispiele für anorganische Opfermaterialien sind Siliciumdioxid, Zinkoxid, Magnesiumcarbonat und Nickelsulfid. Zinkoxid oder Nickelsulfid können beispielsweise mittels carbothermischer Reduktion in flüchtige Verbindungen überführt und freigesetzt werden, und Magnesiumcarbonat durch thermische Zersetzung. Siliciumdioxid kann auf herkömmliche Weise mittels Flusssäure (HF) herausgeätzt werden.

Typische organische Opfermaterialien haben bei einer Temperatur ausgewählt aus dem Bereich von 25 bis 1000°C einen Masseverlust von ≥ 50 Gew.-%, bevorzugt ≥ 80 Gew.-% und besonders bevorzugt ≥ 90 Gew.-%.

Beispiele für organische Opfermaterialien sind Homo- oder Copolymere von ethylenisch ungesättigten Monomeren, beispielsweise Polyethylen, Polypropylen, Polystyrol, Polybutadien, Poly-tert-Butoxystyrol, Polyvinylchlorid, Polyvinylacetat, Polymethacrylmethacrylat, Polyacrylsäure, Polymethacrylat, Polyvinylstearat Polyvinyllaurat oder deren Copolymere; Polyvinylalkohol; Alkylenglycole, wie Ethylenglycol, Butylenglycol, Diethylenglycol, Triethylenglycol; Polyalkylenoxide, wie Polyethylenoxide, Polypropylenoxide oder deren Copolymere; Gamma-Butyrolacton, Propylencarbonat; Polyurethane; und Stickstoff-haltige Lösungsmittel, wie Dimethylformamid, Monoethanolamin, N-Methyl-2-pyrrolidinon (NMP).

Bevorzugte Opfermaterialien sind Polymere von ethylenisch ungesättigten Monomeren, Polyalkylenoxide und Alkylenglycole. Besonders bevorzugte Opfermaterialien werden ausgewählt aus der Gruppe umfassend Polyethylen, Polystyrol, Polyacrylmethacrylat, Polyethylenoxid, Polypropylenoxid und Polyethylenoxid-Polypropylenoxid-Copolymere.

Die Schale der Kern-Schale-Kompositpartikeln basiert im Allgemeinen auf Kohlenstoff, insbesondere auf amorphem Kohlenstoff.

Die Schale ist unporös. Die Carbonisierung der erfindungsgemäßen Kohlenstoff-Precursoren führt zwangsläufig zu der unporösen Schale.

Die Poren der Schale sind < 10 nm, bevorzugt ≤ 5 nm und am meisten bevorzugt ≤ 2 nm (Bestimmungsmethode: Porengrößenverteilung nach BJH (Gasadsorption) gemäß DIN 66134) .

Die Schale hat vorzugsweise eine Porosität von ≤ 2% und besonders bevorzugt ≤ 1% (Bestimmungsmethode der Gesamtporosität: 1 minus [Quotient aus Rohdichte (bestimmt mittels Xylol-Pyknometrie gemäß DIN 51901) und Skelettdichte (bestimmt mittels He-Pyknometrie gemäß DIN 66137-2)]).

Die Schale umhüllt den Kern der Kern-Schale-Kompositpartikel vorzugsweise zumindest teilweise und besonders bevorzugt vollständig. Alternativ kann die Schale auch nur die oberflächennahen Poreneingänge des Kerns ausfüllen beziehungsweise abdichten oder imprägnieren.

Die Schale ist im Allgemeinen undurchlässig für flüssige Medien, insbesondere für wässrige oder organische Lösungsmittel oder Lösungen. Besonders bevorzugt ist die Schale undurchlässig für wässrige oder organische Elektrolyte, Säuren oder Laugen.

Die Flüssigkeitsdichtigkeit der Si/C-Kompositpartikel ist vorzugsweise ≥ 95%, besonders bevorzugt ≥ 96% und am meisten bevorzugt ≥ 97%. Die Flüssigkeitsdichtigkeit kann beispielsweise bestimmt werden entsprechend der weiter unten für die Beispiele angegebenen Bestimmungsmethode.

Der Anteil der Schale beträgt vorzugsweise 1 bis 25 Gew.-%, besonders bevorzugt 5 bis 20 Gew.-% und am meisten bevorzugt 7 bis 15 Gew.-%, bezogen auf das Gesamtgewicht der Kern-Schale-Kompositpartikel.

Die Schale der Kern-Schale-Kompositpartikeln ist erhältlich durch Carbonisieren von einem oder mehreren erfindungsgemäßen Kohlenstoff-Precursoren für die Schale.

Beispiele für Kohlenstoff-Precursoren für die Schale sind Teere oder Peche, insbesondere hochschmelzende Peche, HardCarbon (nicht-graphitisierbar bei Temperaturen von 2500 bis 3000°C), SoftCarbon (graphitisierbar bei Temperaturen von 2500 bis 3000°C) oder Kohlenwasserstoffe mit 1 bis 20 Kohlenstoffatomen. Besonders bevorzugt sind mesogenes Pech, Mesophasen-Pech, Petrolpech und Steinkohlenteerpech.

Beispiele für Kohlenwasserstoffe sind aliphatische Kohlenwasserstoffe mit 1 bis 10 Kohlenstoffatomen, insbesondere 1 bis 6 Kohlenstoffatomen, vorzugsweise Methan, Ethan, Propan, Propylen, Butan, Buten, Pentan, Isobutan, Hexan; ungesättigte Kohlenwasserstoffe mit 1 bis 4 Kohlenstoffatomen, wie Ethylen, Acetylen oder Propylen; aromatische Kohlenwasserstoffe, wie Benzol, Toluol, Styrol, Ethylbenzol, Diphenylmethan oder Naphthalin; weitere aromatische Kohlenwasserstoffe, wie Phenol, Cresol, Nitrobenzol, Chlorbenzol, Pyridin, Anthracen, Phenanthren.

Bevorzugte Kohlenstoff-Precursoren für die Schale sind Mesogenes Pech, Mesophasen-Pech, Petrolpech, Steinkohlenteerpech, Methan, Ethan, Ethylen, Acetylen, Benzol, Toluol oder SoftCarbon. Besonders bevorzugt sind Ethylen, Acetylen, Benzol, Toluol oder SoftCarbon. Am meisten bevorzugt sind Ethylen, Benzol, SoftCarbon aus Petrolpech oder Steinkohlenteerpech.

Die Kohlenstoff-Precursoren für die Schale können beispielsweise auf den Kern, beziehungsweise auf die Matrix, appliziert und anschließend carbonisiert werden. Kohlenwasserstoffe mit 1 bis 20 Kohlenstoffatomen werden vorzugsweise über das CVD-Verfahren carbonisiert, die anderen Kohlenstoff-Precursoren für die Schale werden vorzugsweise thermisch carbonisiert.

Die Kern-Schale-Kompositpartikel können beispielsweise als isolierte Partikel oder als lockere Agglomerate vorliegen. Die Kern-Schale-Kompositpartikel können in Form von Splittern oder Flakes oder vorzugsweise in sphärischer Form vorkommen.

Die volumengewichtete Partikelgrößenverteilungen mit Durchmesser-Perzentilen d₅₀ der Kern-Schale-Kompositpartikel beträgt vorzugsweise ≤ 1 mm, besonders bevorzugt ≤ 50 µm und am meisten bevorzugt ≤ 20 pm, aber vorzugsweise ≥ 1 µm, besonders bevorzugt ≥ 5 µm und am meisten bevorzugt ≥ 10 µm.

Die Partikelgrößenverteilung der Kern-Schale-Kompositpartikel ist bevorzugt monomodal, kann aber auch bimodal oder polymodal sein und ist vorzugsweise schmal. Die volumengewichtete Partikelgrößenverteilung der Kern-Schale-Kompositpartikel ist charakterisiert durch einen Wert für (d₉₀-d₁₀)/d₅₀ von vorzugsweise ≤ 1 und besonders bevorzugt ≤ 0,95.

Die Schale bzw. die Kern-Schale-Kompositpartikel sind durch BET-Oberflächen charakterisiert von vorzugsweise ≤ 50 m²/g, besonders bevorzugt ≤ 25 m²/g und am meisten bevorzugt ≤ 10 m²/g (Bestimmung gemäß DIN 66131 (mit Stickstoff)).

Die Dichte der Kern-Schale-Kompositpartikel ist vorzugsweise ≥ 0,85 g/cm³ und besonders bevorzugt ≥ 1,00 g/cm³ (Bestimmungsmethode: Xylol-Pyknometrie gemäß DIN 51901).

Bei dem in den Kern-Schale-Kompositpartikeln enthaltenen Kohlenstoff kann es sich ausschließlich um einen durch Carbonisierung erhaltenen Kohlenstoff handeln. Alternativ können auch weitere Komponenten als Kohlenstoffquelle eingesetzt werden, wie beispielsweise Graphit, Leitruß, Carbon Nanotubes (CNTs) oder andere Kohlenstoffmodifikationen. Bevorzugt ist ein hoher Anteil des Kohlenstoffs der Kern-Schale-Kompositpartikel durch Carbonisierung erhalten, beispielsweise bevorzugt ≥ 40 Gew.-%, besonders bevorzugt ≥ 70 Gew.-% und am meisten bevorzugt ≥ 90 Gew.-%, bezogen auf die Gesamtmasse des Kohlenstoffs der Kern-Schale-Kompositpartikel. Alternativ können 40 bis 90 Gew.-% oder 60 bis 80 Gew.-% des Kohlenstoffs der Kern-Schale-Kompositpartikel durch Carbonisierung hergestellt sein, bezogen auf die Gesamtmasse des Kohlenstoffs der Kern-Schale-Kompositpartikel.

Die Kern-Schale-Kompositpartikel enthalten vorzugsweise 5 bis 50 Gew.-%, besonders bevorzugt 10 bis 40 Gew.-% und am meisten bevorzugt 20 bis 40 Gew.-% Siliciumpartikel. Kohlenstoff ist in den Kern-Schale-Kompositpartikeln zu vorzugsweise 50 bis 95 Gew.-%, besonders bevorzugt 60 bis 85 Gew.-% und am meisten bevorzugt 60 bis 80 Gew.-% enthalten. Gegebenenfalls können auch Sauerstoff und vorzugsweise Stickstoff in den Kern-Schale-Kompositpartikel enthalten sein; diese liegen vorzugsweise chemisch gebunden in Form von Heterocyclen vor, beispielsweise als Pyridin- und Pyrrol-Einheiten (N), Furan (O) oder Oxazole (N, O). Der Sauerstoff-Gehalt der Kern-Schale-Kompositpartikel ist vorzugsweise ≤ 20 Gew-%, besonders bevorzugt ≤ 10 Gew-% und am meisten bevorzugt ≤ 5 Gew-%. Der Stickstoff-Gehalt der Kern-Schale-Kompositpartikel ist vorzugsweise im Bereich von 0,5 bis 10 Gew.-% und besonders bevorzugt 2 bis 5 Gew.-%. Die Angaben in Gew.-% beziehen sich jeweils auf das Gesamtgewicht eines Kern-Schale-Kompositpartikels und addieren sich insgesamt zu 100 Gew.-% auf.

Die Kern-Schale-Kompositpartikel können gegebenenfalls zusätzliche Komponenten enthalten, beispielsweise basierend auf inaktiven Materialien, wie Metallen (z. B. Kupfer), Oxiden, Carbiden oder Nitriden. Damit kann die elektrochemische Stabilität positiv beeinflusst werden. Der Anteil der inaktiven Materialien ist vorzugsweise ≤ 10 Gew-%, mehr bevorzugt ≤ 5 Gew-% und besonders bevorzugt ≤ 1 Gew-%, bezogen auf das Gesamtgewicht der Kern-Schale-Kompositpartikel. Am meisten bevorzugt sind keine solchen inaktiven Materialien enthalten.

Die Kern-Schale-Kompositpartikel weisen allgemein eine überraschend hohe Stabilität bei Druckbelastung und/oder Scherbelastung auf. Die Druckstabilität und die Scherstabilität der Kern-Schale-Kompositpartikel manifestieren sich beispielsweise dadurch, dass die Kern-Schale-Kompositpartikel bei Druck- beziehungsweise Scher-Belastung keine oder nur eine geringfügige Änderung ihrer Durchmesser-Perzentilen d₅₀ (volumengewichtete Partikelgrößenverteilung) erfahren.

Die Änderung der Durchmesser-Perzentilen d₅₀ (volumengewichtete Partikelgrößenverteilung) der Kern-Schale-Kompositpartikel durch eine Druckbelastung von 17 MPa beträgt vorzugsweise ≤ 15%, bezogen auf die Durchmesser-Perzentilen d₅₀ (volumengewichtete Partikelgrößenverteilung) der Kern-Schale-Kompositpartikel vor der Druckbelastung. Die Messung der Druckstabilität erfolgt mittels einer hydraulischen Tablettenpresse (Fa. Specac), deren Pressform (Durchmesser 12 mm) mit Kern-Schale-Kompositpartikel befüllt (Füllhöhe: 0,5 cm) und anschließend mit einem Gewicht von 0,2 t (17 MPa) belastet wird. Der angelegte Druck orientiert sich am Druck zur Verdichtung von Graphitelektroden auf 1,6 g/cm³.

Die Änderung der Durchmesser-Perzentilen d₅₀ (volumengewichtete Partikelgrößenverteilung) der Kern-Schale-Kompositpartikel durch Scherbelastung (Dissolver; 16 m/s; 30 min) ist vorzugsweise ≤ 15%, bezogen auf die Durchmesser-Perzentilen d₅₀ (volumengewichtete Partikelgrößenverteilung) der Kern-Schale-Kompositpartikel vor der Scherbelastung. Zur Messung der Scherstabilität wird eine Dispersion der Kern-Schale-Kompositpartikel in einer Lösung von Natrium-Carboxymethylcellulose (Na-CMC, Daicel 1380) (1,4% Na-CMC in Wasser; Gewichtsverhältnis: Kern-Schale-Kompositpartikel zu Na-CMC = 90:10) mit einem Dissolver (Fa. Getzmann, Dispermat) gerührt (Umlaufgeschwindigkeit 16 m/s).

Ein weiterer Gegenstand der Erfindung sind Verfahren zur Herstellung von Kern-Schale-Kompositpartikeln durch
1) Beschichten von Siliciumpartikeln mit einem oder mehreren Opfermaterialien,
2) Beschichten des Produkts aus Stufe 1) mit einem oder mehreren Kohlenstoff-Vorstufen,
3) Carbonisieren des Produkts aus Stufe 2),
   wobei die Opfermaterialien in dieser Carbonisierungsstufe oder in einer weiteren Stufe 4) zersetzt und freigesetzt werden unter Bildung eines porösen Komposits,
5) Beschichten des so erhaltenen porösen Komposits mit einem oder mehreren erfindungsgemäßen Kohlenstoff-Precursoren für die Schale,
6) Carbonisieren des Produkts aus Stufe 5) und anschließend
7) gegebenenfalls Entfernen von Unter- oder Überkorn, beispielsweise durch typische Klassierungstechniken, wie Sieben oder Sichten,
   wodurch Kern-Schale-Kompositpartikel erhalten werden, deren Kern eine Siliciumpartikel enthaltende, poröse, Kohlenstoff-basierte Matrix ist,
   in der Siliciumpartikel in Poren der Matrix eingeschlossen sind und die Siliciumpartikel enthaltenden Poren einen Durchmesser von ≥ 60 nm haben, und
   wobei das Carbonisieren in Stufe 6) zu einer unporösen Schale führt, wobei unporöse Schale bedeutet, dass etwaige in der Schale enthaltene Poren < 10 nm sind.

Das Beschichten in Stufe 1) kann beispielsweise erfolgen, indem Opfermaterialien aus Dispersionen enthaltend Siliciumpartikel und Opfermaterialien ausgefällt werden. Hierbei scheiden sich Opfermaterialien auf Siliciumpartikeln ab. Durch anschließende Filtration, Zentrifugation und/oder Trocknung können die so beschichteten Siliciumpartikel isoliert werden. Alternativ können die Siliciumpartikel auch auf herkömmliche Weise mit Opfermaterialien gepfropft werden.

Das Beschichten in Stufe 2 mit den Kohlenstoff-Vorstufen kann nach analogen Verfahren erfolgen wie für Stufe 1) beschrieben.

Das Carbonisieren in Stufe 3) kann beispielsweise thermisch erfolgen, vorzugsweise bei Temperaturen von 400 bis 1400°C, besonders bevorzugt 500 bis 1100°C und am meisten bevorzugt 700 bis 1000°C. Hierfür können die herkömmlichen Reaktoren und sonstige übliche Reaktionsbedingungen Anwendung finden.

Das organische Opfermaterial oder anorganisches Opfermaterial, wie Carbonate, Oxide oder Sulfide, kann in Stufe 3 oder in einer weiteren thermischen Behandlung 4) zersetzt werden. Alternativ können Opfermaterialien, insbesondere anorganische Opfermaterialien, wie SiO₂, durch Ätzen, beispielsweise mit HF in einer Stufe 4) freigesetzt werden.

Das Beschichten in Stufe 5) kann im Falle der Kohlenwasserstoffe mit 1 bis 20 Kohlenstoffatomen als Kohlenstoff-Precursoren nach herkömmlichen CVD-Verfahren erfolgen. Mit den sonstigen erfindungsgemäßen Kohlenstoff-Precursoren für die Schale kann das poröse Komposit beschichtet werden wie für Stufe 1) beschrieben.

Das Carbonisieren in Stufe 6 kann analog durchgeführt werden, wie für Stufe 3 beschrieben, vorzugsweise durch thermische Behandlung.

Die weitere Ausgestaltung der einzelnen Beschichtungs- oder Carbonisierungs-Schritte oder auch der Stufe 4) kann auf an sich bekannte Weise in herkömmlichen Vorrichtungen erfolgen, wie dem Fachmann auf dem vorliegenden technischen Gebiet vertraut ist.

Ein weiterer Gegenstand der vorliegenden Erfindung ist die Verwendung der Kern-Schale-Kompositpartikel in Elektrodenmaterialien für Lithiumionen-Batterien, insbesondere zur Herstellung der negativen Elektroden von Lithiumionen-Batterien.

Ein weiterer Gegenstand der vorliegenden Erfindung sind Lithium-Ionen-Batterien mit einer ersten Elektrode als Kathode, mit einer zweiten Elektrode als Anode, mit einer zwischen beiden Elektroden angeordneten Membran als Separator, mit zwei Anschlüssen an den Elektroden, mit einem die genannten Teile aufnehmendes Gehäuse und mit einem Lithium-Ionen enthaltenden Elektrolyten, mit dem die beiden Elektroden getränkt sind, wobei ein Teil der zweiten Elektrode erfindungsgemäße Kern-Schale-Kompositpartikel enthält.

Die Kern-Schale-Kompositpartikel können als Silicium-Komponente für Elektrodenmaterialien von Lithiumionen-Batterien Einsatz finden. Die Herstellung entsprechender Lithiumionen-Batterien kann erfolgen, wie beispielsweise beschrieben in der WO 2015/117838.

Die erfindungsgemäßen Kern-Schale-Kompositpartikel zeichnen sich durch ein deutlich verbessertes elektrochemisches Verhalten aus und führen zu Lithiumionen-Batterien mit hohen volumetrischen Kapazitäten und hervorragenden Anwendungseigenschaften. Die Schale bzw. die Kern-Schale-Kompositpartikel sind permeabel für Lithium-Ionen und Elektronen und ermöglichen somit den Ladungstransport. Die SEI in Lithiumionen-Batterien kann mit den erfindungsgemäßen Kompositpartikeln in großem Umfang reduziert werden und platzt auf Grund des erfindungsgemäßen Designs der Kompositpartikel nicht mehr oder zumindest in weit geringerem Umfang ab. All dies führt zu einer hohen Zyklenbeständigkeit entsprechender Lithiumionen-Batterien. Die vorteilhaften Effekte werden durch die erfindungsgemäße Ausgestaltung der Kern-Schale-Kompositpartikel bewirkt, insbesondere durch die gezielte, lokale Einbettung der Siliciumpartikel in erfindungsgemäße Poren, den Aufbau der Matrix und der Schale. Diese Merkmale wirken in synergistischer Weise zusammen.

Die erfindungsgemäße Ausgestaltung der Poren und die Einlagerung von Siliciumpartikel in solche Poren ist auch dazu vorteilhaft, um die gewünschte hohe gravimetrische und volumetrische Kapazität bzw. Energiedichte von Lithiumionen-Batterien zu erreichen.

Die erfindungsgemäße Kohlenstoff-Basis der Kompositpartikel ist vorteilhaft für die Leitfähigkeit der Kern-Schale-Kompositpartikel, so dass sowohl der Lithium- als auch den Elektronentransport zum Silicium-basierten Aktivmaterial gewährleistet ist. Durch einen direkten Kontakt zwischen den Siliciumpartikeln und den Porenwänden der Matrix kann der Ladungstransport zum Silicium beschleunigt werden, insbesondere wenn zwischen den Siliciumpartikeln und der Matrix eine chemische Anbindung vorliegt.

Die erfindungsgemäßen Kern-Schale-Kompositpartikel sind auch überraschend stabil und mechanisch belastbar und verfügen insbesondere über eine hohe Druckstabilität und eine hohe Scherstabilität. Die Partikel neigen bei mechanischer Beanspruchung weniger zum Zerbröseln als herkömmliche poröse Kompositpartikel.

Schließlich kann durch erfindungsgemäß definierte Komposit-Partikelgrößen oder durch die schmale Partikelgrößenverteilung der Kompositpartikel die Verarbeitbarkeit der Materialien zu Elektrodentinten und -beschichtungen oder eine homogene Verteilung der Partikel in den Elektroden weiter verbessert werden.

Die nachfolgenden Beispiele dienen zur weiteren Erläuterung der Erfindung:
Folgende analytische Methoden und Geräte wurden zur Charakterisierung eingesetzt:

### Rasterelektronenmikroskopie (REM/EDX):

Die mikroskopischen Untersuchungen wurden mit einem Rasterelektronemikroskop Zeiss Ultra 55 und einem energiedispersvem Röntgenspektrometer INCA x-sight durchgeführt. Die Proben wurden vor der Untersuchung zur Verhinderung von Aufladungsphänomenen mit einem Baltec SCD500 Sputter-/Carbon-Coating mit Kohlenstoff bedampft. Die in den Abbildungen gezeigten Querschnitte der Kern-Schale-Kompositpartikel wurden mit einem Ionencutter Leica TIC 3X bei 6 kV erzeugt.

### Anorganische Analytik / Elementaranalyse:

Die in den Beispielen angegebenen C-Gehalte wurden mit einem Leco CS 230 Analysator ermittelt, zur Bestimmung von O- und ggf. N- bzw. H-Gehalten wurde ein Leco TCH-600 Analysator eingesetzt. Die qualitative und quantitative Bestimmung von anderen angebenen Elementen in den erhaltenene Kern-Schale-Kompositpartikeln wurden mittels ICP (inductively coupled plasma)-Emissionspektrometrie (Optima 7300 DV, Fa. Perkin Elmer) bestimmt. Die Proben wurden dazu in einer Mikrowelle (Microwave 3000, Fa. Anton Paar) sauer aufgeschlossen (HF/HNO₃). Die ICP-OES-Bestimmung orientiert sich an der ISO 11885 "Wasserbeschaffenheit - Bestimmung von ausgewählten Elementen durch induktiv gekoppelte Plasma-Atom-Emissionsspektrometrie (ICP-OES) (ISO 11885:2007); Deutsche Fassung EN ISO 11885:2009", die zur Untersuchung saurer, wässriger Lösungen eingesetzt wird (z.B. angesäuerte Trinkwasser-, Abwasser- und andere Wasserproben, Königswasserextrakte von Böden und Sedimenten).

### Partikelgrößenbestimmung:

Die Bestimmung der Partikelgrößenverteilung erfolgte im Rahmen dieser Erfindung nach ISO 13320 mittels statischer Laserstreuung mit einem Horiba LA 950. Dabei muss bei der Vorbereitung der Proben besondere Sorgfalt auf die Dispergierung der Partikel in der Messlösung aufgewendet werden, um statt Einzelpartikel nicht die Größe von Agglomeraten zu messen. Für die hier untersuchten Kern-Schale-Kompositpartikel wurden die Partikel in Ethanol dispergiert. Dazu wurde die Dispersion vor der Messung bei Bedarf 4 min in einem Hielscher Ultraschall-Laborgerät Modell UIS250v mit Sonotrode LS24d5 mit 250 W Ultraschall behandelt.

### Thermogravimetrie (TGA):

Das Verhältnis verschiedener Kohlenstoff-Modifikationen in einem Komposit (Leitruß (LR) neben amorphem Kohlenstoff (C)) wurde mittels Thermogravimetrie mit einer Mettler Thermowaage TGA 851 ermittelt. Die Messung wurde unter Sauerstoff als Messgas im Temperaturbereich von 25-1000 °C und einer Heizrate von 10 °C/min durchgeführt. Bei Anwesenheit von Leitruß und C findet der durch Verbrennung des Gesamtkohlenstoffs verursachte Massenverlust im Temperaturbereich von 400-650 °C in zwei Stufen statt, aus deren Verhältnis das in den betreffenden Beispielen angegebene C:LR-Verhältnis ermittelt wurde.

### Oberflächenmessung nach BET:

Die spezifische Oberfläche der Materialien wurde über Gasadsoprtion mit Stickstoff mit einem Gerät Sorptomatic 199090 (Porotec) oder Gerät SA-9603MP (Horiba) nach der BET-Methode gemessen.

### Si-Zugänglichkeit gegenüber flüssigen Medien (Flüssigkeitsdichtigkeit) :

Die Bestimmung der Zugänglichkeit von Silicium in den Kern-Schale-Kompositpartikeln gegenüber flüssigen Medien wurde mit folgender Testmethode an Materialien mit bekanntem Silicium-Gehalt (aus Elementaranalyse) durchgeführt:
0,5-0,6 g Kern-Schale-Kompositpartikel wurden mit 20 ml einer Mischung aus NaOH (4M; H₂O) und Ethanol (1:1 vol.) zunächst mittels Ultraschall dispergiert und anschließend 120 min bei 40 °C gerührt. Die Komposit-Partikel wurden über 200 nm Nylonmembran filtriert, mit Wasser mit zum Neutral-pH gewaschen und anschließend im Trockenschrank bei 100 °C/50-80 mbar getrocknet. Der Silicium-Gehalt nach der NaOH-Behandlung wurde bestimmt und mit dem Si-Gehalt vor dem Test verglichen. Bei einer relativen Änderung des Si-Gehalts von ≤5% wird die Komposit-Struktur als dicht angesehen (entspricht einer Dichtigkeit von ≥95%).

### Rohdichte:

Die Rohdichte (=Dichte des porösen Festkörpers basierend auf dem Volumen einschließlich der Porenräume) wurde in Anlehnung an die Norm DIN51901 "Prüfung von Kohlenstoffmaterialien - Bestimmung der Dichte nach dem Xylolverfahren - Feststoffe" mittels Pyknometrie an Dispersionen der Kompositpulver in Xylol als Mittelwert von mindestens 2 Messungen ermittelt.

### Theoretische Kapazität:

Die in den Beispielen angegebene theoretische Kapazität der erhaltenen Kern-Schale-Kompositpartikel wurde nicht experimentell ermittelt, sondern aus der elementaren Zusammensetzung der Materialien berechnet. Dabei wurden für die Berechnung folgende Kapazitäten der reinen Komponenten zugrunde gelegt: Si 4199 mAh/g; (amorpher) Kohlenstoff 100 mAh/g; N (als Teil der amorphen C-Matrix) 100 mAh/g. Weiterhin wurde bei der Berechnung angenommen, dass in den Kompositen enthaltene O-Gehalte in Form von SiO₂ vorliegen und damit den Beitrag des aktiven Siliciums unter Berücksichtigung des SiO₂-Gehalts herabsetzen.
Folgende Materialien wurden aus kommerziellen Quellen bezogen bzw. selber hergestellt und ohne weitere Reinigung direkt eingesetzt:
eine Suspension aus Silicium-Nanopulver (splitterförmige, nicht-aggregierte Si-Partikel, selbst hergestellt durch Nassmahlung in einer Rührwerkskugelmühle in Ethanol (Feststoffgehalt 22 Gew-%, d₅₀ = 180 nm) oder 2-Propanol (Feststoff-Gehalt 20 Gew-%; d₅₀ = 200 nm)), Polyacrylnitril (Mw = 150.000; Sigma-Aldrich), Dimethylformamid (DMF; extra pure; Sigma-Aldrich), Polyethylenoxid-Polypropylenoxid-Copolymer (Pluronic P123®; Sigma-Aldrich), Pech (hochschmelzend; Erweichungspunkt 235 °C).

### Vergleichsbeispiel 1:

### Einbetten von polymerbeschichteten Silicium-Nanopartikeln in einen Kohlenstoff-Precusor (Polyacrylnitril):

Polymer-beschichtetes Silicium-Nanopulver (27,6 g; enthaltend 3,6 g Silicium und 24 g Polyethylenoxid-Polypropylenoxid-Copolymer (Pluronic P123®)) wurde in einer Lösung aus 48 g Polyacrylnitril (PAN) in 3200 ml DMF mittels Ultraschall dispergiert (Hielscher UIS250V; Amplitude 80%, Cycle: 0,9; Dauer: 30 min). Die resultierende Dispersion wurde mit einem Laborsprühtrockner vom Typ B-290 (BÜCHI GmbH) mit Inertloop B-295 und Entfeuchter B-296 (BÜCHI GmbH) versprüht und getrocknet (Düsenspitze 0,7 mm; Düsenkappe 1,4 mm; Düsentemperatur 180 °C; N₂-Gasfluss 30; Aspirator 100%; Pumpe 20%).
Es wurden 64,8 g eines feinen, braunen Pulvers (Präkomposit) erhalten (Ausbeute 86%).

### Carbonisieren des Präkomposits:

31,3 g des im Vorherigen beschriebenen Präkomposits wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Argon/H₂ als Inertgas carbonisiert: Zuerst Heizrate 10 °C/min, Temperatur 300 °C, Haltedauer 90 min, Ar/H₂-Flussrate 200 ml/min; danach direkt weiter mit Heizrate 10 °C/min, Temperatur 1000 °C, Haltedauer 3 h, Ar/H₂-Flussrate 200 ml/min. Nach dem Abkühlen wurden 9,00 g eines schwarzen Pulvers erhalten (Carbonisierungsausbeute 29%), welches mittels Nasssiebung von Überkorn befreit wurde. Es wurden 3,89 g poröse Komposit-Partikel mit einer Partikelgröße von d₉₉ < 20 µm erhalten. Elementare Zusammensetzung: Si 15,8 Gew-%; C 75,2 Gew.-%; O 4,58 Gew-%; N 4,25 Gew-%; B <50 ppm; P 200 ppm; Al <50 ppm; < 50 ppm; Cu < 10 ppm; K 340 ppm; Li ≤ 10 ppm; Zr 720 ppm;
Partikelgrößenverteilung: Monomodal; d₁₀: 8,03 pm, d₅₀: 13,6 µm, d₉₀: 20,9 µm; (d₉₀-d₁₀) /d₅₀ = 0,95;
Spez. Oberfläche (BET) = 23,1 m²/g;
Si-Dichtigkeit: 92,4% (nicht flüssigkeitsdicht);
Theoretische Kapazität: 573 mAh/g.

### Beispiel 2:

Die porösen Kern-Schale-Kompositpartikel aus Beispiel 1 wurden mit einer Beschichtung aus amorphem Kohlenstoff (basierend auf SoftCarbon; 10 Gew-%) versehen:
3,89 g der in Beispiel 1 nach dem Carbonisierungsschritt erhaltenen porösen Komposit-Partikel wurden zusammen mit 630 mg Pech (hochschmelzend; Erweichungspunkt 235 °C) in 60 ml p-Xylol mittels Ultraschall (Hielscher UIS250V; Amplitude 80%, Cycle: 0,9; Dauer: 30 min) dispergiert. Die Suspension wurde 90 min unter Rückfluss gerührt und innerhalb von 14 h auf Raumtemperatur abgekühlt. Das Lösungsmittel wurde unter vermindertem Druck entfernt, und die Pech-beschichteten Komposit-Partikel wurden in ein Quarzglasschiffchen (QCS GmbH) überführt und unter Verwendung einer Kaskadenregelung inklusive eines Probenelements Typ N mit Argon/H₂ als Inertgas carbonisiert: Zuerst Heizrate 10 °C/min, Temperatur 250 °C; danach direkt weiter mit Heizrate 5 °C/min, Temperatur 550 °C; danach direkt weiter mit 10 °C/min, 1000 °C, Haltedauer 2 h, Ar/H₂-Flussrate 200 ml/min. Nach dem Abkühlen wurden 3,99 g eines schwarzen Pulvers erhalten (Carbonisierungsausbeute 88%), welches mittels Nasssiebung von Überkorn befreit wurde. Es wurden 3,06 g poröse Si/C-Komposit-Partikel mit dichter äußerer C-Beschichtung und mit einer Partikelgröße von d₉₉ < 20 µm erhalten.
Elementare Zusammensetzung: Si 13,2 Gew-%; C 79,4 Gew.-%; O 3,58 Gew-%; N 3,79 Gew-%; B <50 ppm; P <200 ppm; Al <50 ppm; Ca <50 ppm; Cu <10 ppm; K 342 ppm; Li<10 ppm; Zr 669 ppm; Partikelgrößenverteilung: Monomodal; d₁₀: 7,92 pm, d₅₀: 12,9 µm, d₉₀: 19,6 µm; (d₉₀-d₁₀)/d₅₀ = 0,91;
Spez. Oberfläche (BET) = 2,2 m²/g;
Si-Dichtigkeit: 97,7% (flüssigkeitsdicht);
Theoretische Kapazität: 506 mAh/g.

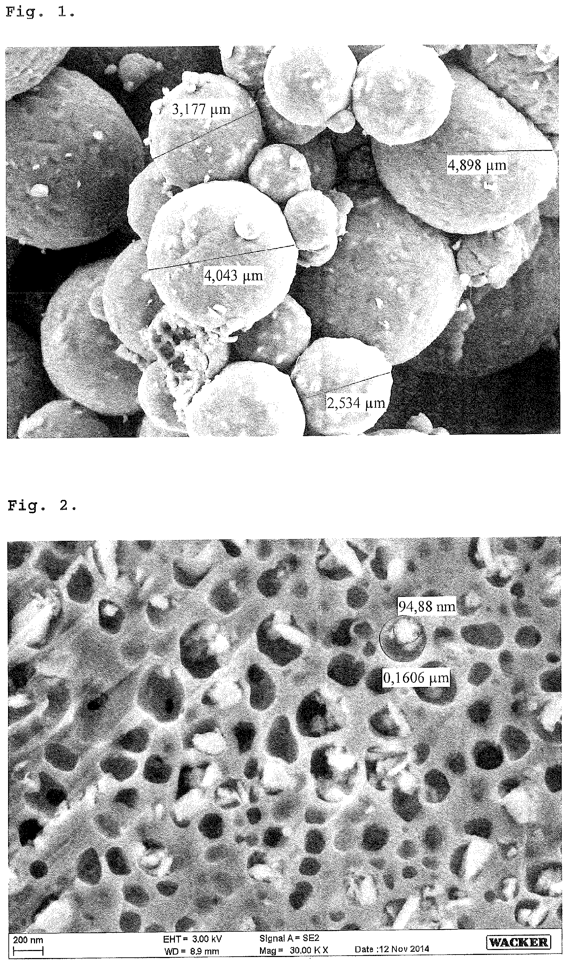

Fig. 1 zeigt das REM-Bild der in Beispiel 2 erhaltenen porösen Kern-Schale-Kompositpartikel (7.500-fache Vergrößerung). Die Oberfläche ist glatt und geschlossen und somit flüssigkeitsdicht.

Fig. 2 zeigt einen REM-Schnitt durch einen in Beispiel 2 erhaltenen porösen Kern-Schale-Kompositpartikel (30.000-fache Vergrößerung). Die Silicium-Partikel sind in lokale Makroporenräume eingebettet, welche die Silicium-Volumenausdehnung abpuffern können. Zu sehen ist beispielsweise ein Partikel mit einem Durchmesser von ∼95 nm eingebettet in einen Porenraum mit ∼161 nm Durchmesser (dP ∼ 1,7^{∗}dSi).

### Vergleichsbeispiel 3:

### Herstellung eines porösen Kern-Schale-Kompositpartikel ohne dichte Beschichtung, das zusätzlich im Inneren Leitruß (Super P) enthält:

13,5 g Polyacrylnitril (PAN) und 6,75 g Polyethylenoxid-Polypropylenoxid-Copolymer (Pluronic P123®) wurden bei Raumtemperatur in 900 ml Dimethylformamid (DMF) gelöst. 13,8 g einer Silicium-Nanopulver-Suspension (26,9% in Isopropanol; entspricht 3,71 g Nano-Si) und 1,78 g Leitruß (Super P) wurden mittels Ultraschall in die PAN-Lösung dispergiert (Hielscher UIS250V; Amplitude 80%, Cycle: 0,9; Dauer: 15 min). Die resultierende Dispersion wurde mit einem Laborsprühtrockner vom Typ B-290 (BÜCHI GmbH) mit Inertloop B-295 und Entfeuchter B-296 (BÜCHI GmbH) versprüht und getrocknet (Düsenspitze 0,7 mm; Düsenkappe 1,4 mm; Düsentemperatur 130 °C; N₂-Gasfluss ∼30; Aspirator 100%; Pumpe 20%). Es wurden 19,2 g eines braunschwarzen Pulvers erhalten (75% Ausbeute).
19,0 g des Si/Pluronic/Leitruß/PAN-Pulvers wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Argon/H₂ als Inertgas carbonisiert: Zuerst Heizrate 10 °C/min, Temperatur 300 °C, Haltedauer 90 min, Ar/H₂-Flussrate 200 ml/min; danach direkt weiter mit Heizrate 10 °C/min, Temperatur 1000 °C, Haltedauer 3 h, Ar/H₂-Flussrate 200 ml/min. Nach dem Abkühlen wurden 7,59 g eines schwarzen Pulvers erhalten (Carbonisierungsausbeute 40%), welches mittels Nasssiebung von Überkorn befreit wurde. Es wurden 5,03 g poröse Komposit-Partikel mit einer Partikelgröße von d₉₉ < 20 µm erhalten.
Elementare Zusammensetzung: Si 26,4 Gew-%; C 65,1 Gew.-% (davon 17 Gew-% Leitruß); O 4,99 Gew-%; N 3,37 Gew-%; B 50 ppm; P 100 ppm; Al <50 ppm; Ca 35 ppm; Cu < 10 ppm; K 157 ppm; Fe 103 ppm; Li<10 ppm; Zr 1400 ppm;
Partikelgrößenverteilung: Monomodal; d₁₀: 5,82 µm, d₅₀: 10,4 µm, d₉₀: 16,7 µm; (d₉₀-d₁₀)/d₅₀ = 1,0;
Spez. Oberfläche (BET) = 35,4 m²/g;
Si-Dichtigkeit: 13,7% (nicht flüssigkeitsdicht);
Rohdichte: ∼2,2 g/cm3;
Theoretische Kapazität: 976 mAh/g.

### Beispiel 4 (Bsp.4):

### Die porösen, Leitruß-haltigen Kern-Schale-Kompositpartikel aus Beispiel 3 wurden mit einer zusätzlichen Beschichtung aus amorphem Kohlenstoff (SoftCarbon; 10 Gew-%) versehen:

4,54 g der in Beispiel 3 nach dem Carbonisierungsschritt erhaltenen porösen Komposit-Partikel wurden zusammen mit 720 mg Pech (hochschmelzend; Erweichungspunkt 235 °C) in 60 ml p-Xylol mittels Ultraschall (Hielscher UIS250V; Amplitude 80%, Cycle: 0,9; Dauer: 30 min) dispergiert. Die Suspension wurde 90 min unter Rückfluss gerührt und innerhalb von 14 h auf Raumtemperatur abgekühlt. Das Lösungsmittel wurde unter vermindertem Druck entfernt, und die Pech-beschichteten Komposit-Partikel wurden in ein Quarzglasschiffchen (QCS GmbH) überführt und unter Verwendung einer Kaskadenregelung inklusive eines Probenelements Typ N mit Argon/H₂ als Inertgas carbonisiert: Zuerst Heizrate 10 °C/min, Temperatur 250 °C; danach direkt weiter mit Heizrate 5 °C/min, Temperatur 550 °C; danach direkt weiter mit 10 °C/min, 1000 °C, Haltedauer 2 h, Ar/H₂-Flussrate 200 ml/min. Nach dem Abkühlen wurden 4,86 g poröse Si/C-Komposit-Partikel mit dichter äußerer C-Beschichtung und mit einer Partikelgröße von d₉₉ ≤ 20 µm erhalten (Carbonisierungsausbeute 93%). Elementare Zusammensetzung: Si 25,7 Gew-%; C 67,4 Gew.-% (davon 15 Gew-% Leitruß); 0 3,90 Gew-%; N 2,87 Gew-%; B <25 ppm; P <100 ppm; Al 50 ppm; Ca 44 ppm; Cu <10 ppm; K 158 ppm; Li<10 ppm; Zr 1300 ppm;
Partikelgrößenverteilung: Monomodal; d₁₀: 5,17 µm, d₅₀: 8,66 µm, d₉₀: 13,7 µm; (d₉₀-d₁₀)/d₅₀ = 0,98;
Spez. Oberfläche (BET) = 23,0 m²/g;
Si-Dichtigkeit: 95,6% (flüssigkeitsdicht);
Theoretische Kapazität: 991 mAh/g.

### Beispiel 5:

### Herstellen einer Elektrodenbeschichtung mit dem Komposit aus Beispiel 4:

0,24 g Leitruß (Imerys, Super C65) wurden in 11,34 g einer 1,4 Gew.% Lösung von Natrium-Carboxymethylcellulose (Daicel, Grade 1380) in Wasser mittels Dissolver bei einer Umlaufgeschwindigkeit von 4,5 m/s für 5 min und von 17 m/s für 30 min unter Kühlung bei 20°C dispergiert. Nach Zugabe von 1,50 g des Kompositmaterials aus Beispiel 4, 1,02 g Wasser und 0,60 g Ethanol wurde dann weitere 30 min bei einer Umlaufgeschwindigkeit von 12 m/s gerührt. Nach Entgasen wurde die Dispersion mittels eines Filmziehrahmens mit 0,16 mm Spalthöhe (Erichsen, Modell 360) auf eine Kupferfolie (Schlenk Metallfolien, SE-Cu58) mit Dicke von 0,030 mm aufgebracht. Die so hergestellte Elektrodenbeschichtung wurde anschließend 60 min bei 80°C und 1 bar Luftdruck getrocknet. Das mittlere Flächengewicht der trockenen Elektrodenbeschichtung betrug 1,55 mg/cm².

### Beispiel 6:

### Elektrochemische Testung von Elektroden aus Beispiel 5

Die elektrochemischen Untersuchungen wurden an einer Halbzelle in Drei-Elektroden-Anordnung (stromlose Potentialmessung) durchgeführt. Die Elektrodenbeschichtung aus Beispiel 5 wurde als Arbeitselektrode eingesetzt, Lithium-Folie (Rockwood Lithium, Dicke 0,5mm) als Referenz- und Gegenelektrode verwendet. Ein mit 100 µl Elektrolyt getränkter, 6-lagiger Vliesstoffstapel (Freudenberg Vliesstoffe, FS2226E) diente als Separator. Der verwendete Elektrolyt bestand aus einer 1-molaren Lösung von Lithiumhexafluorophosphat in einem 3:7 (v/v) Gemisch von Ethylencarbonat und Diethylcarbonat, welche mit 2 Gew.% Vinylencarbonat versetzt war. Der Bau der Zelle erfolgte in einer Glovebox (< 1 ppm H₂O, O₂), der Wassergehalt in der Trockenmasse aller verwendeten Komponenten lag unterhalb von 20 ppm.
Die elektrochemische Testung wurde bei 20°C durchgeführt. Das Laden bzw. Lithiieren der Elektrode erfolgte im cc/cv-Verfahren (constant current / constant voltage) mit konstantem Strom von 80 mA/g (entspricht C/10) in den ersten beiden Zyklen und von 160 mA/g (entspricht C/5) in den darauffolgenden Zyklen und nach Erreichen der Spannungsgrenze von 5 mV mit konstanter Spannung bis Unterschreiten eines Stroms von 16 mA/g bzw. 40 mA/g. Das Entladen der Zelle erfolgte im cc-Verfahren (constant current) mit konstantem Strom von 80 mA/g (entspricht C/10) in den ersten beiden Zyklen und von 400 mA/g (entspricht C/2) in den darauffolgenden Zyklen bis Erreichen der Spannungsgrenze von 1,5 V. Der gewählte spezifische Strom bezog sich auf das Gewicht der Beschichtung aus Beispiel 5.

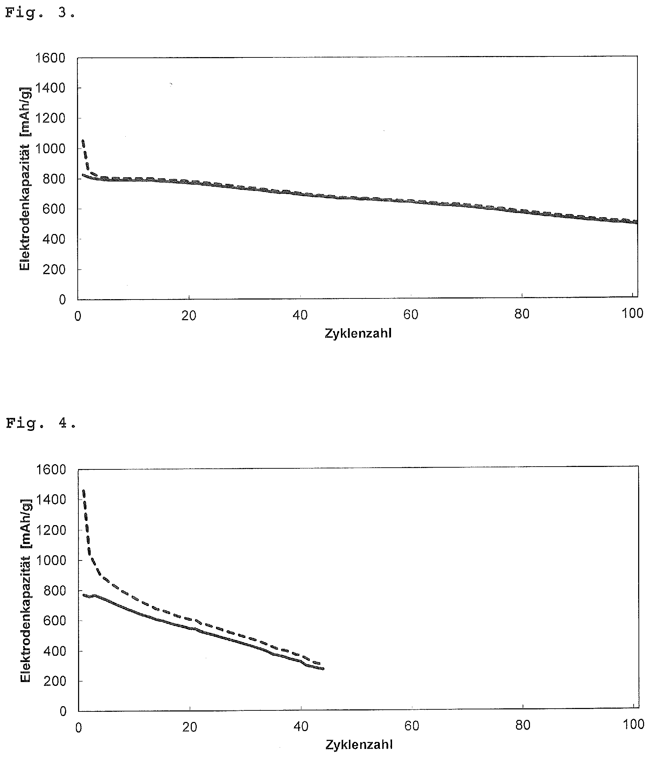

Fig. 3 zeigt die Lade- (gestrichelte Line) und Entladekapazität (durchgezogene Linie) einer Halbzelle mit der Elektrodenbeschichtung aus Beispiel 5 in Abhängigkeit von der Zyklenzahl. Die Elektrodenbeschichtung aus Beispiel 5 weist eine Coulomb-Effizienz im ersten Zyklus von 78,5 % und eine reversible Anfangskapazität von etwa 800 mAh/g auf. Nach 60 Lade-/Entladezyklen besitzt sie noch 80 % ihrer ursprünglichen Kapazität.

### Vergleichsbeispiel 7 (VBsp.7):

Ein Si/C-Kompositpartikel wurde gemäß der in Beispiel 3 beschriebenen Vorgehensweise hergestellt, allerdings ohne Zusatz von Pluronic® als Porenbildner (→ keine lokale Porosität) und ohne die in Bsp. 4 beschriebene dichte äußere C-Beschichtung. Nach Carbonisierung (Carbonisierungsausbeute 72%) und Abtrennung von Überkorn mittels Nasssiebung wurden 321 mg nichtporöse Komposit-Partikel mit einer Partikelgröße von d₉₉ ≤ 20 µm erhalten.
Elementare Zusammensetzung: Si 25,1 Gew-%; C 68,0 Gew.-% (davon ∼14 Gew-% Leitruß); O 4,40 Gew-%; N 2,30 Gew-%; Al 50 ppm; Ca 56 ppm; Cu <10 ppm; K 130 ppm; Li<10 ppm;
Partikelgrößenverteilung: Bimodal; d₁₀: 0,22 µm, d₅₀: 2,76 µm, d₉₀: 10,3 µm ; (d₉₀-d₁₀) /d₅₀ = 3,65;
Spez. Oberfläche (BET) = 102,9 m²/g;
Si-Dichtigkeit: 8,0% (nicht flüssigkeitsdicht);
Theoretische Kapazität: 963 mAh/g.

### Vergleichsbeispiel 8:

### Herstellen einer Elektrodenbeschichtung mit dem Komposit aus Vergleichsbeispiel 7:

0,21 g Leitruß (Imerys, Super C65) wurden in 9,92 g einer 1,4 Gew.% Lösung von Natrium-Carboxymethylcellulose (Daicel, Grade 1380) in Wasser mittels Dissolver bei einer Umlaufgeschwindigkeit von 4,5 m/s für 5 min und von 17 m/s für 30 min unter Kühlung bei 20°C dispergiert. Nach Zugabe von 1,40 g des Kompositmaterials aus Vergleichsbeispiel 7 und 3,52 g Wasser wurde dann weitere 30 min bei einer Umlaufgeschwindigkeit von 12 m/s gerührt. Nach Entgasen wurde die Dispersion mittels eines Filmziehrahmens mit 0,10 mm Spalthöhe (Erichsen, Modell 360) auf eine Kupferfolie (Schlenk Metallfolien, SE-Cu58) mit Dicke von 0,030 mm aufgebracht. Die so hergestellte Elektrodenbeschichtung wurde anschließend 60 min bei 80°C und 1 bar Luftdruck getrocknet. Das mittlere Flächengewicht der trockenen Elektrodenbeschichtung betrug 0,63 mg/cm².

### Vergleichsbeispiel 9:

### Elektrochemische Testung von Elektroden aus Vergleichsbeispiel 8:

Elektroden mit dem Komposit aus Vergleichsbeispiel 7 wurden wie in Beispiel 6 beschrieben getestet.

Fig. 4 zeigt die Lade- (gestrichelte Line) und Entladekapazität (durchgezogene Linie) einer Halbzelle mit der Elektrodenbeschichtung aus Vergleichsbeispiel 8 in Abhängigkeit von der Zyklenzahl. Die Elektrodenbeschichtung aus Vergleichsbeispiel 8 weist eine Coulomb-Effizienz im ersten Zyklus von 52,8 % und eine reversible Anfangskapazität von etwa 800 mAh/g auf. Nach nur 15 Lade-/Entladezyklen ist sie auf 80 % ihrer ursprünglichen Kapazität abgefallen.

Wie Tabelle 1 zu entnehmen ist, zeigen Halbzellen mit Elektroden auf Basis des erfindungsgemäßen Komposits mit lokaler Porosität und dichter Kohlenstoffbeschichtung (Beispiel 4) im Vergleich zu Elektroden auf Basis des analogen Komposits ohne lokale Porosität und Kohlenstoffbeschichtung (Vergleichsbeispiel 7) bei vergleichbarer reversibler Anfangskapazität überraschenderweise eine höhere Coulomb-Effizienz im ersten Zyklus (= geringerer irreversibler Kapazitätsverlust) sowie ein stabileres elektrochemisches Verhalten in den Folgezyklen.

**Tabelle 1: Austestungsergebnisse mit den Kompositen aus Beispiel 4 und Vergleichsbeispiel 7 in Lithium-Ionen-Batterien:**

| (V)Bsp. | Komposit | Entladekapazität nach Zyklus 1 [mAh/g] | Coulomb-Effizienz für Zyklus 1 [%] | Zyklenzahl mit > 80% Kapazitätserhalt |
|---|---|---|---|---|
| | Bsp. 4 | 810 | 78,5 | 60 |
| | VBsp.7 | 780 | 52,8 | 15 |

## Patentansprüche

1. Kern-Schale-Kompositpartikel,
wobei der Kern eine Siliciumpartikel enthaltende, poröse, Kohlenstoff-basierte Matrix ist,
in der Siliciumpartikel in Poren der Matrix eingeschlossen sind und die Siliciumpartikel enthaltenden Poren einen Durchmesser von ≥ 60 nm haben,
wobei die Schale erhältlich ist durch Carbonisierung von einem oder mehreren Kohlenstoff-Precursoren ausgewählt aus der Gruppe umfassend Teere, Peche, HardCarbon, SoftCarbon und Kohlenwasserstoffe mit 1 bis 20 Kohlenstoffatomen, was zu einer unporösen Schale führt,
wobei unporöse Schale bedeutet, dass etwaige in der Schale enthaltene Poren < 10 nm sind.

2. Kern-Schale-Kompositpartikel gemäß Anspruch 1, **dadurch gekennzeichnet, dass** die Siliciumpartikel volumengewichtete Partikelgrößenverteilungen mit Durchmesser-Perzentilen d₅₀ von ≥ 50 nm und ≤ 800 nm aufweisen.

3. Kern-Schale-Kompositpartikel gemäß Anspruch 1 oder 2, **dadurch gekennzeichnet, dass** das Verhältnis der Durchmesser der Poren der Matrix, die Siliciumpartikel enthalten, und der Durchmesser der Siliciumpartikel ≥ 1,1 und ≤ 3 ist.

4. Kern-Schale-Kompositpartikel gemäß Anspruch 1 bis 3, **dadurch gekennzeichnet, dass** die Matrix auf Kohlenstoff basiert, der erhältlich ist durch Carbonisieren von einer oder mehreren Kohlenstoff-Vorstufen ausgewählt aus der Gruppe umfassend Resorcin-Formaldehyd-Harz, Lignin und Polyacrylnitril.

5. Kern-Schale-Kompositpartikel gemäß Anspruch 1 bis 4, **dadurch gekennzeichnet, dass** die Poren, die Siliciumpartikel enthalten, erhältlich sind, indem Siliciumpartikel zunächst mit einem oder mehreren Opfermaterialien beschichtet werden und die so erhaltenen Produkte mit einer oder mehreren Kohlenstoff-Vorstufen beschichtet werden und die Beschichtung basierend auf den Opfermaterialien zu einem späteren Zeitpunkt wieder entfernt wird, wobei die Beschichtung basierend auf den Kohlenstoff-Vorstufen vor oder während des Entfernens der Opfermaterialien in eine Matrix basierend auf Kohlenstoff überführt wird.

6. Kern-Schale-Kompositpartikel gemäß Anspruch 5, **dadurch gekennzeichnet, dass** die Opfermaterialien anorganischer oder organischer Natur sind,
wobei anorganische Opfermaterialien Oxide, Carbonate, Silicate, Carbide, Nitride oder Sulfide der Elemente Silicium, Magnesium, Calcium, Zinn, Zink, Titan oder Nickel umfassen und
organische Opfermaterialien ausgewählt werden aus der Gruppe umfassend Polyethylen, Polypropylen, Polystyrol, Polybutadien, Poly-tert-Butoxystyrol, Polyvinylchlorid, Polyvinylacetat, Polymethacrylmethacrylat, Polyacrylsäure, Polymethacrylat, Polyvinylstearat Polyvinyllaurat und deren Copolymere; Polyvinylalkohol; Alkylenglycole; Polyalkylenoxide; Gamma-Butyrolacton; Propylencarbonat; Polyurethane; Dimethylformamid, Monoethanolamin und N-Methyl-2-pyrrolidinon.

7. Kern-Schale-Kompositpartikel gemäß Anspruch 1 bis 6, **dadurch gekennzeichnet, dass** etwaige in der Schale enthaltene Poren < 5 nm sind.

8. Kern-Schale-Kompositpartikel gemäß Anspruch 1 bis 7, **dadurch gekennzeichnet, dass** der Anteil der Schale 5 bis 20 Gew.-% und/oder der Anteil des Kerns 80 bis 95 Gew.-% beträgt, wobei sich die Angaben in Gew.-% auf das Gesamtgewicht der Kern-Schale-Kompositpartikel beziehen und sich jeweils auf 100 Gew.-% aufaddieren.

9. Kern-Schale-Kompositpartikel gemäß Anspruch 1 bis 8, **dadurch gekennzeichnet, dass** die Kern-Schale-Kompositpartikel volumengewichtete Partikelgrößenverteilungen mit Durchmesser-Perzentilen d₅₀ von ≥ 1 µm und ≤ 1 mm aufweisen.

10. Kern-Schale-Kompositpartikel gemäß Anspruch 1 bis 9, **dadurch gekennzeichnet, dass** die Änderung der Durchmesser-Perzentilen d₅₀ (volumengewichtete Partikelgrößenverteilung) der Kern-Schale-Kompositpartikel durch eine Druckbelastung von 17 MPa ≤ 15% beträgt, bezogen auf die Durchmesser-Perzentilen d₅₀ (volumengewichtete Partikelgrößenverteilung) der Kern-Schale-Kompositpartikel vor der Druckbelastung.

11. Kern-Schale-Kompositpartikel gemäß Anspruch 1 bis 10, **dadurch gekennzeichnet, dass** die Änderung der Durchmesser-Perzentilen d₅₀ (volumengewichtete Partikelgrößenverteilung) der Kern-Schale-Kompositpartikel in Folge einer Scherbelastung (Dissolver; 16 m/s; 30 min) ≤ 15% ist, bezogen auf die Durchmesser-Perzentilen d₅₀ (volumengewichtete Partikelgrößenverteilung) der Kern-Schale-Kompositpartikel vor der Scherbelastung.

12. Verfahren zur Herstellung der Kern-Schale-Kompositpartikel der Ansprüche 1 bis 11 durch
1) Beschichten von Siliciumpartikeln mit einem oder mehreren Opfermaterialien,
2) Beschichten des Produkts aus Stufe 1) mit einem oder mehreren Kohlenstoff-Vorstufen,
3) Carbonisieren des Produkts aus Stufe 2),
wobei die Opfermaterialien in dieser Carbonisierungsstufe oder in einer weiteren Stufe 4) zersetzt und freigesetzt werden unter Bildung eines porösen Komposits,
5) Beschichten des so erhaltenen porösen Komposits mit einem oder mehreren Kohlenstoff-Precursoren aus Anspruch 1,
6) Carbonisieren des Produkts aus Stufe 5),
wodurch Kern-Schale-Kompositpartikel erhalten werden, deren Kern eine Siliciumpartikel enthaltende, poröse, Kohlenstoff-basierte Matrix ist,
in der Siliciumpartikel in Poren der Matrix eingeschlossen sind und die Siliciumpartikel enthaltenden Poren einen Durchmesser von ≥ 60 nm haben, und
wobei das Carbonisieren in Stufe 6) zu einer unporösen Schale führt, wobei unporöse Schale bedeutet, dass etwaige in der Schale enthaltene Poren < 10 nm sind.

13. Verwendung der Kern-Schale-Kompositpartikel der Ansprüche 1 bis 11 in Elektrodenmaterialien für Lithiumionen-Batterien.

14. Lithium-Ionen-Batterien mit einer ersten Elektrode als Kathode, mit einer zweiten Elektrode als Anode, mit einer zwischen beiden Elektroden angeordneten Membran als Separator, mit zwei Anschlüssen an den Elektroden, mit einem die genannten Teile aufnehmendem Gehäuse und mit einem Lithium-Ionen enthaltenden Elektrolyten, mit dem die beiden Elektroden getränkt sind, wobei ein Teil der zweiten Elektrode Kern-Schale-Kompositpartikel der Ansprüche 1 bis 11 enthält.

## Claims

1. Core-shell composite particles,
wherein the core is a porous, carbon-based matrix which contains silicon particles in which silicon particles are enclosed in the pores of the matrix and the pores containing silicon particles have a diameter of ≥ 60 nm,
and the shell is obtainable by carbonization of one or more carbon precursors selected from the group consisting of tars, pitches, hard carbon, soft carbon and hydrocarbons having from 1 to 20 carbon atoms, which leads to a nonporous shell, where nonporous shell means that any pores present in the shell are < 10 nm.

2. Core-shell composite particles according to Claim 1, **characterized in that** the silicon particles have volume-weighted particle size distributions having diameter percentiles d₅₀ of ≥ 50 nm and ≤ 800 nm.

3. Core-shell composite particles according to Claim 1 or 2, **characterized in that** the ratio of the diameter of the pores of the matrix containing silicon particles to the diameter of the silicon particles is ≥ 1.1 and ≤ 3.

4. Core-shell composite particles according to any of Claims 1 to 3, **characterized in that** the matrix is based on carbon which is obtainable by carbonization of one or more carbon precursors selected from the group consisting of resorcinol-formaldehyde resin, lignin and polyacrylonitrile.

5. Core-shell composite particles according to any of Claims 1 to 4, **characterized in that** the pores containing silicon particles are obtainable by firstly coating silicon particles with one or more sacrificial materials and coating the resulting products with one or more carbon precursors and once again removing the coating based on the sacrificial materials at a later point in time, resulting in the coating based on the carbon precursors being converted before or during removal of the sacrificial materials into a matrix based on carbon.

6. Core-shell composite particles according to Claim 5, **characterized in that** the sacrificial materials are inorganic or organic in nature, where inorganic sacrificial materials comprise oxides, carbonates, silicates, carbides, nitrides or sulphides of the elements silicon, magnesium, calcium, tin, zinc, titanium or nickel and
organic sacrificial materials are selected from the group consisting of polyethylene, polypropylene, polystyrene, polybutadiene, poly-tert-butoxystyrene, polyvinyl chloride, polyvinyl acetate, polymethacryl methacrylate, polyacrylic acid, polymethacrylate, polyvinyl stearate polyvinyl laurate and copolymers thereof; polyvinyl alcohol; alkylene glycol; polyalkylene oxide; gamma-butyrolactone; propylene carbonate; polyurethane; dimethylformamide, monoethanolamine and N-methyl-2-pyrrolidinone.

7. Core-shell composite particles according to any of Claims 1 to 6, **characterized in that** any pores present in the shell are < 5 nm.

8. Core-shell composite particles according to any of Claims 1 to 7, **characterized in that** the proportion of the shell is from 5 to 20% by weight and/or the proportion of the core is from 80 to 95% by weight, where the figures in % by weight are based on the total weight of the core-shell composite particles and in each case add up to 100% by weight.

9. Core-shell composite particles according to any of Claims 1 to 8, **characterized in that** the core-shell composite particles have volume-weighted particle size distributions having diameter percentiles d₅₀ of ≥ 1 µm and ≤ 1 mm.

10. Core-shell composite particles according to any of Claims 1 to 9, **characterized in that** the change in the diameter percentiles d₅₀ (volume-weighted particle size distribution) of the core-shell composite particles due to a compressive stress of 17 MPa is ≤ 15%, based on the diameter percentiles d₅₀ (volume-weighted particle size distribution) of the core-shell composite particles before the compressive stress.

11. Core-shell composite particles according to any of Claims 1 to 10, **characterized in that** the change in the diameter percentiles d₅₀ (volume-weighted particle size distribution) of the core-shell composite particles due to a shear stress (highspeed stirrer; 16 m/s; 30 min) is ≤ 15%, based on the diameter percentiles d₅₀ (volume-weighted particle size distribution) of the core-shell composite particles before the shear stress.

12. Process for producing the core-shell composite particles of Claims 1 to 11 by
1) coating of silicon particles with one or more sacrificial materials,
2) coating of the product from step 1) with one or more carbon precursors,
3) carbonization of the product from step 2), with the sacrificial materials being decomposed and
liberated in this carbonization step or in a further step 4) to form a porous composite,
5) coating of the resulting porous composite with one or more carbon precursors according to Claim 1,
6) carbonization of the product from step 5), as a result of which core-shell composite particles whose core is a porous, carbon-based matrix which contains silicon particles and in which silicon particles are enclosed in the pores of the matrix and the pores containing silicon particles have a diameter of ≥ 60 nm are obtained,
wherein the carbonization in step 6) leads to a nonporous shell, where nonporous shell means that any pores present in the shell are < 10 nm.

13. Use of the core-shell composite particles of Claims 1 to 11 in electrode materials for lithium ion batteries.

14. Lithium ion batteries having a first electrode as cathode, a second electrode as anode, a membrane arranged between the two electrodes as separator, two connections to the electrodes, a housing accommodating the abovementioned parts and an electrolyte which contains lithium ions and with which the two electrodes are impregnated, with part of the two electrodes containing core-shell composite particles according to any of Claims 1 to 11.

## Revendications

1. Particules composites noyau-coque,
le noyau étant une matrice poreuse à base de carbone, contenant des particules de silicium, dans laquelle des particules de silicium sont incorporées dans des pores de la matrice et les pores contenant des particules de silicium possédant un diamètre de ≥ 60 nm,
la coque pouvant être obtenue par carbonisation d'un ou plusieurs précurseurs de carbone choisis dans le groupe comprenant les goudrons, les brais, le carbone dur, le carbone mou et des hydrocarbures comportant 1 à 20 atomes de carbone, ce qui conduit à une coque non poreuse,
« coque non poreuse » signifiant que d'éventuels pores contenus dans la coque sont < 10 nm.

2. Particules composites noyau-coque selon la revendication 1, **caractérisées en ce que** les particules de silicium présentent des répartitions granulométriques pondérées en volume présentant des percentiles de diamètre d₅₀ de ≥ 50 nm à ≥ 800 nm.

3. Particules composites noyau-coque selon la revendication 1 ou 2, **caractérisées en ce que** le rapport des diamètres des pores de la matrice, qui contiennent des particules de silicium, aux diamètres des particules de silicium est ≥ 1,1 et ≤ 3.

4. Particules composites noyau-coque selon les revendications 1 à 3, **caractérisées en ce que** la matrice est à base de carbone, qui peut être obtenu par carbonisation d'un ou plusieurs précurseurs de carbone choisis dans le groupe comprenant la résine résorcinol-formaldéhyde, la lignine et le polyacrylonitrile.

5. Particules composites noyau-coque selon les revendications 1 à 4, **caractérisées en ce que** les pores qui contiennent des particules de silicium peuvent être obtenus en revêtant d'abord des particules de silicium avec un ou plusieurs matériaux sacrificiels et les produits ainsi obtenus étant revêtus par un ou plusieurs précurseurs de carbone et le revêtement à base de matériau sacrificiel est à nouveau ultérieurement enlevé, le revêtement à base de précurseurs de carbone étant transféré dans une matrice à base de carbone avant ou pendant l'enlèvement du matériau sacrificiel.

6. Particules composites noyau-coque selon la revendication 5, **caractérisées en ce que** les matériaux sacrificiels sont de nature inorganique ou organique,
les matériaux sacrificiels inorganiques comprenant des oxydes, des carbonates, des silicates, des carbures, des nitrures ou des sulfures des éléments silicium, magnésium, calcium, étain, zinc, titane ou nickel et
les matériaux sacrificiels organiques étant choisis dans le groupe comprenant le polyéthylène, le polypropylène, le polystyrène, le polybutadiène, le poly(tert-butoxy-styrène), le poly(chlorure de vinyle), le poly(acétate de vinyle), le polyméthacrylate de méthacrylate, le poly(acide acrylique), le polyméthacrylate, le poly(stéarate de vinyle), le poly(laurate de vinyle) et leurs copolymères ; le poly(alcool vinylique) ; les alkylèneglycols ; les poly(oxyde d'alkylène) ; la gamma-butyrolactone ; le carbonate de propylène ; les polyuréthanes ; le diméthylformamide, la monoéthanolamine et la N-méthyl-2-pyrrolidinone.

7. Particules composites noyau-coque selon les revendications 1 à 6, **caractérisées en ce que** les pores éventuels contenus dans la coque sont < 5 nm.

8. Particules composites noyau-coque selon les revendications 1 à 7, **caractérisées en ce que** la part de la coque est de 5 à 20 % en poids et/ou la part du noyau est de 80 à 95 % en poids, les données en % en poids se rapportant au poids total des particules composites noyau-coque et s'additionnant à chaque fois jusqu'à 100 % en poids.

9. Particules composites noyau-coque selon les revendications 1 à 8, **caractérisées en ce que** les particules composites noyau-coque présentent des répartitions granulométriques pondérées en volume présentant des percentiles de diamètre d₅₀ de ≥ 1 µm à ≤ 1 mm.

10. Particules composites noyau-coque selon les revendications 1 à 9, **caractérisées en ce que** la modification des percentiles de diamètre d₅₀ (répartitions granulométriques pondérées en volume) des particules composites noyau-coque par une contrainte de compression de 17 Mpa est de ≤ 15 %, par rapport aux percentiles de diamètre d₅₀ (répartitions granulométriques pondérées en volume) des particules composites noyau-coque avant la contrainte de compression.

11. Particules composites noyau-coque selon les revendications 1 à 10, **caractérisées en ce que** la modification des percentiles de diamètre d₅₀ (répartitions granulométriques pondérées en volume) des particules composites noyau-coque à la suite d'une contrainte de cisaillement (Dissolver ; 16 m/s ; 30 min) est ≤ 15 %, par rapport aux percentiles de diamètre d₅₀ (répartitions granulométriques pondérées en volume) des particules composites noyau-coque avant la contrainte de cisaillement.

12. Procédé pour la préparation des particules composites noyau-coque des revendications 1 à 11 par
1) le revêtement de particules de silicium par un ou plusieurs matériaux sacrificiels,
2) le revêtement du produit de l'étape 1) par un ou plusieurs précurseurs de carbone,
3) la carbonisation du produit de l'étape 2), les matériaux sacrificiels dans cette étape de carbonisation ou dans une étape supplémentaire
4) étant décomposés et libérés avec formation d'un composite poreux,
5) le revêtement du composite poreux ainsi obtenu par un ou plusieurs précurseurs de carbone de la revendication 1,
6) la carbonisation du produit de l'étape 5),
par lequel des particules composites noyau-coque sont obtenues, dont le noyau est une matrice poreuse à base de carbone, contenant des particules de silicium,
dans laquelle des particules de silicium sont incorporées dans des pores de la matrice et les pores contenant des particules de silicium possèdent un diamètre de ≥ 60 nm, et
la carbonisation dans l'étape 6) conduit à une coque non poreuse, « coque non poreuse » signifiant que d'éventuels pores contenus dans la coque sont < 10 nm.

13. Utilisation des particules composites noyau-coque selon les revendications 1 à 11 dans des matériaux d'électrode pour des batteries à ions lithium.

14. Batteries à ions lithium comportant une première électrode en tant que cathode, comportant une deuxième électrode en tant qu'anode, comportant une membrane en tant que séparateur disposée entre les deux électrodes, comportant deux raccords au niveau des électrodes, comportant un boîtier supportant les parties indiquées et comportant un électrolyte contenant des ions lithium, dans lequel les deux électrodes sont immergées, une partie de la deuxième électrode contenant des particules composites noyau-coque selon les revendications 1 à 11.
